# EUROPÄISCHE PATENTSCHRIFT

(11) **EP 1 159 655 B1**
(45) Veröffentlichungstag und Bekanntmachung des Hinweises auf die Patenterteilung: **17.12.2003**
(21) Anmeldenummer: 00925041.6
(22) Anmeldetag: 09.03.2000
(51) Int. Cl.: G05B 19/05

(54) **AUTOMATISIERUNGSSYSTEM MIT AUS MODULKOMPONENTEN BESTEHENDEN AUTOMATISIERUNGSOBJEKTEN**
AUTOMATION SYSTEM WITH AUTOMATION OBJECTS CONSISTING OF MODULAR COMPONENTS
SYSTEME D'AUTOMATISATION COMPORTANT DES OBJETS D'AUTOMATISATION COMPOSES D'ELEMENTS MODULAIRES

(30) Priorität: 09.03.1999 DE 19910536
(43) Veröffentlichungstag der Anmeldung: 05.12.2001
(73) Patentinhaber: SIEMENS AKTIENGESELLSCHAFT, 80333 München (DE)
(72) Erfinder: BECKER, Norbert, D-91058 Erlangen (DE); BIEHLER, Georg, D-90453 Nürnberg (DE); DIEZEL, Matthias, D-90482 Nürnberg (DE); DONNER, Albrecht, D-09236 Markersdorf (DE); ECKARDT, Dieter, D-91074 Herzogenaurach (DE); HERBERTH, Harald, D-90522 Oberasbach (DE); KRÄMER, Manfred, D-90530 Wendelstein (DE); LANGE, Ronald, D-90766 Fürth (DE); LANGKAFEL, Dirk, D-91090 Effeltrich (DE); LEINS, Ralf, D-75228 Ispringen (DE); SCHNEIDER, Karsten, D-91054 Erlangen (DE); WELZ, Ulrich, D-91074 Herzogenaurach (DE); WINDL, Helmut, D-93077 Bad Abbach (DE); MÖLLER-NEHRING, Walter, D-91056 Erlangen (DE); SCHMOLL, Jürgen, D-91801 Markt Berolzheim (DE)
(86) Internationale Anmeldenummer: DE0000741
(87) Internationale Veröffentlichungsnummer: WO00054119

(56) Entgegenhaltungen:
- EP-B- 0 603 560
- WO-A-97/11415
- MAJAPURO R ET AL: "A MODULAR SOFTWARE ARCHITECTURE FOR MANUFACTURING CONTROL" , PROCEEDINGS OF THE CONFERENCE ON CONTROL APPLICATIONS,US,NEW YORK, IEEE, VOL. CONF. 3, PAGE(S) 1745-1750 XP000679407 ISBN: 0-7803-1873-0 das ganze Dokument
- MICK R O: "CLIENT/SERVER COMPUTING COMES TO THE PLANT FLOOR" , I & CS - INDUSTRIAL AND PROCESS CONTROL MAGAZINE,US,CHILTON COMPANY. RADNOR, PENNSYLVANIA, VOL. 66, NR. 9, PAGE(S) 41-42,47-49 XP000402803 ISSN: 1074-2328 das ganze Dokument
- KAISER V: "THE SIMATIC S7 SPECIALISTS: YOUR GUARANTEE OF TOP MANUFACTURING QUALITY AND PRODUCTIVITY" , ENGINEERING AND AUTOMATION,DE,SIEMENS AKTIENGESELLSCHAFT, BERLIN, VOL. 18, NR. 1, PAGE(S) 6-7 XP000581132 ISSN: 0939-2068 das ganze Dokument

## Beschreibung

Die Erfindung betrifft ein Automatisierungssystem mit mindestens einem Automatisierungsobjekt.

Die Erfindung betrifft weiter ein Verfahren zur Erstellung eines Automatisierungsobjekts und zur Einbettung des Automatisierungsobjekts in ein Engineeringsystem.

Ein derartiges Automatisierungssystem kommt insbesondere im Bereich der Automatisierungstechnik zum Einsatz. Ein derartiges Automatisierungssystem besteht in der Regel aus einer Vielzahl von einzelnen Automatisierungsobjekten, die häufig eine hohe Abhängigkeit des Automatisierungsobjekts vom jeweils verwendeten Engineeringsystem aufweisen. Dies hat zufolge, dass häufig Automatisierungsobjekte eines Herstellers ein eigenes Engineeringsystem erfordern und nicht in anderen Systemen mit Automatisierungsobjekten anderer Hersteller verwendbar sind.

Aus der WO 97/11415 ist ein Automatisierungssystem für das Steuern und Regeln von Maschinen und Anlagen der Kunststoffindustrie mittels speicherprogrammierbaren Steuerungen bekannt. Die speicherprogrammierbaren Steuerungen weisen Schaltungseinzelteile nachbildende digitale Logikbausteine auf, mit denen die gewünschten Steuer- und Regelfunktionen modular realisierbar sind.

Der Erfindung liegt die Aufgabe zugrunde, eine offene und verteilte Automatisierungslösung anzugeben, die insbesondere auch eine Verwendung von Automatisierungsobjekten verschiedener Hersteller ermöglicht.

Diese Aufgabe wird durch ein Automatisierungssystem mit den im Anspruch 1 bzw. durch ein Verfahren mit dem im Anspruch 7 angegebenen Merkmalen gelöst.

Die erste, zweite und dritte Komponente bilden die drei funktionalen Teile des Automatisierungsobjekts. Die erste Komponente beinhaltet die Systemfunktionalität, d.h. interne Dienste, die im wesentlichen eine Implementierungsbasis für die anderen Teile bieten. Die zweite Komponente bildet die generische Basisfunktionalität, d.h. allgemeine Dienste, die alle Automatisierungsobjekte besitzen und die ihre Handhabung erleichtern. Dahinter verbergen sich beispielsweise Dienste wie Speichern und Laden eines Automatisierungsobjekts, Abfragen von Verwaltungsdateien etc.. Es sind dabei jedoch keine technologischen Dienste wie spezielle Steuerungsalgorithmen enthalten. Die dritte Komponente bildet die Modulverwaltung, d.h. alle Dienste, die benötigt werden, um die in den Modulen enthaltene technologische Funktionalität bereitzustellen. Die einzelnen Module des Automatisierungsobjekts enthalten, neben den analogen Funktionalitäten Systemfunktionalität und generische Basisfunktionalität gegebenenfalls die eigentliche technologische Funktionalität wie Algorithmen zur Verknüpfung von Automatisierungsobjekten usw.. Das Automatisierungsobjekt ist somit als generische Hülle konzipiert, wobei die Automatisierungsfunktionalität in unabhängige austauschbare Module faktorisiert ist. Das Automatisierungsobjekt verwaltet diese Module und stellt diese auf Anforderung bereit, besitzt jedoch keine eigene Funktionalität. Je nach Bedarf zeigt das Automatisierungsobjekt mittels der von ihn verwalteten Module die gewünschte Funktionalität. Dabei werden für einige der Grundaufgaben der Automatisierung. wie Verschaltung, Parametrisierung, etc. Standardmodule definiert. Durch die offene, verteilte Struktur des Automatisierungsobjekts ergibt sich ein geringer Erstellungsaufwand bei der Generierung von Automatisierungsobjekten. Die Funktionalität eines Automatisierungsobjekts kann aufgrund des modularen Charakters schrittweise erweitert werden. Zudem ist ein geringeres Resourcenverbrauch in Bezug auf Speicherkapazität etc. gegeben. Weiterhin ergibt sich durch die Aufspaltung der Funktionalität in unabhängige Module eine parallele und verteilte Nutzung des Automatisierungsobjekts. Durch die offene Struktur ist das Automatisierungsobjekt von jeweiligen Engineeringsystem entkoppelt, d.h. es besteht auch die Möglichkeit zur Verwendung von Automatisierungsobjekten verschiedener Hersteller.

Einigen der Grundanforderungen der Automatisierung kann dadurch Rechnung getragen werden, daß die zweite Komponente als Standardmodul ausgebildet ist und zur Verschaltung und/oder Parametrierung des Automatisierungsobjekts vorgesehen ist.

Eine einheitliche und übersichtliche Datenbasis für verschiedene Engineeringsystem kann dadurch sichergestellt werden, daß das Automatisierungsobjekt eine Objektbibliothek zur Verwaltung und/oder Speicherung der Automatisierungsobjekte mit zugehörigen Modulen aufweist.

Ein geringer Resourcenverbrauch insbesondere in Bezug auf Speicherbedarf kann dadurch erzielt werden, daß Automatisierungssystem mindestens ein Engineeringsystem aufweist, wobei die im einem Engineeringsystem benutzen Automatisierungsobjekte jeweils lediglich auf die Module zugreifen, deren Funktion im jeweiligen Engineeringsystem benötigt wird.

Ein Zugriff auf die technologische Funktionalität eines Automatisierungsobjekts kann in der weise erfolgen, daß das Engineeringsystem Mittel zur Anforderung einer Modulliste eines einem Automatisierungsobjekt zugeordneten Automatisierungsobjekts aufweist, daß auf Anforderung eines Engineeringsystems das Automatisierungsobjekt ein angefordertes Modul dadurch auswählt, daß an das Engineeringsystem ein verweis auf das angeforderte Modul an das Engineeringsystem erfolgt und daß ein Aufruf auf die technologische Funktionalität des Moduls durch das Engineeringsystem über den Verweis auf das Modul erfolgt.

Eine Aufspaltung der Funktionalität der Automatisierungsobjekte entsteht dadurch, daß sich die Intelligenz eines Automatisierungsobjekts über mehrere unabhängige Komponenten und/ oder Module erstreckt, die jeweils Mittel zur Kommunikation miteinander aufweisen.

Im folgenden wird die Erfindung anhand der in den Figuren dargestellten Ausführungsbeispiele näher beschrieben und erläutert.

Es zeigen:
- FIG 1: ein prinzipielle Darstellung eines Ausführungsbeispiels zur Struktur eines Automatisierungsobjekts,
- FIG 2: eine schematische Darstellung zum Herstellungsprozeß eines Automatisierungsobjekts,
- FIG 3: eine Prozeßablaufübersicht zum Zugriff auf die technologische Funktionalität eines Automatisierungsobjekts und
- FIG 4: eine Prinzipdarstellung zur Verwendung eines Automatisierungsobjekts in verschiedenen Engineeringsystemen.

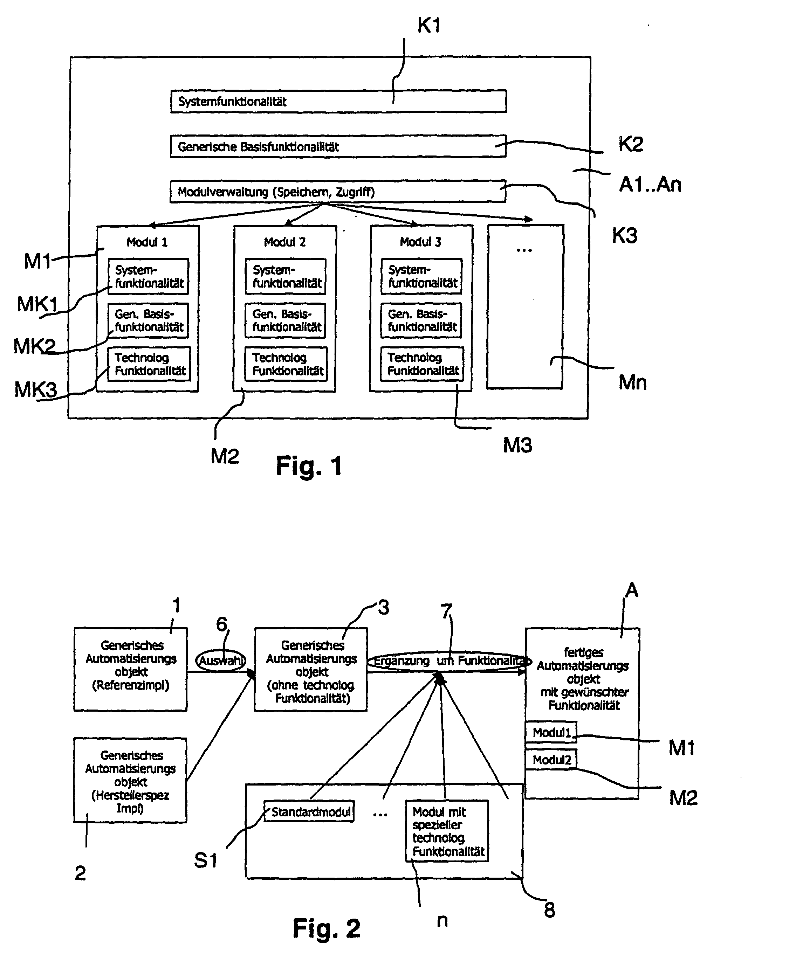

FIG 1 zeigt eine prinzipielle Darstellung einer Struktur eines Automatisierungsobjekts A1..An. Das Automatisierungsobjekt A1..An besteht aus einer ersten Komponente K1, einer zweiten Komponente K2 sowie einer dritten Komponente K3. Die erste Komponente K1 bildet den funktionalen Teil "Systemfunktionalität". Die zweite Komponente K2 bildet den funktionalen Teil "generische Basisfunktionalität", während die dritte Komponente K3 den funktionalen Teil "Modulverwaltung" beinhaltet. Der dritten Komponente K3 sind Module Ml..Mn zugeordnet die wiederum jeweils Modulkomponenten MK1, MK2, MK3 aufweisen. Die erste Modulkomponente MK1 repräsentiert wiederum die Systemfunktionalität des Moduls 1, die zweite Modulkomponente MK2 die generische Basisfunktionalität des Moduls Ml..Mn, während die dritte Komponente MK3 des Moduls Ml..Mn die eigentliche technologische Funktionalität des Automatisierungsobjekts beinhaltet.

Die erste Komponente K1 des Automatisierungsobjekts A1..An beinhaltet die Systemfunktionalität, d.h. die internen Dienste, die im wesentlichen eine Implementierungsbasis für die anderen Teile bieten. Die zweite Komponente K2 beinhaltet die generische Basisfunktionalität, d.h. allgemeine Dienste, die alle Automatisierungsobjekte besitzen und die ihre Handierung erleichtern. Darunter verbergen sich beispielsweise Dienste wie Speicherung und Laden eines Automatisierungsobjekts, Abfragen von Verwaltüngsdaten etc.. Die dritte Komponente K3 dient der Modulverwaltung. Sie beinhaltet daher alle Dienste, die benötigt werden, um die in den Modulen enthaltene technologische Funktionalität bereitzustellen.

FIG 2 zeigt eine schematische Darstellung zum Herstellungsprozeß eines Automatisierungsobjekts A. Ausgangspunkt dieses Herstellungsprozesses bildet ein generisches Automatisierungsobjekt 1 und/oder 2, welches als Referenzimplementierung oder als Hersteller spezifische Implementierung vorhanden ist. In einem Prozeßschritt 6 wird das generische Automatisierungsobjekt 1 ausgewählt oder es wird eine generisches Automatisierungsobjekt, welches als Hersteller spezifische Implementierungs vorliegt, verwendet. Hierdurch ergibt sich ein generisches Automatisierungsobjekt 3, welches noch keine technologische Funktionalität aufweist. Im Prozeßschritt 7 folgt eine Ergänzung des Automatisierungsobjekts um Funktionalität. Hierzu werden aus Standardmodulen Sl..Sn die jeweils benötigte technologische Funktionalität ausgewählt. Ausgangsprodukt des in FIG 2 dargestellten Herstellungsprozesses ist ein Automatisierungsobjekt A, welches als fertiges Modular aufgebautes Automatisierungsobjekt mit der gewünschten Funktionalität, die sich in den Modulen M1, M² wiederspiegelt, vorliegt.

Die aus FIG 2 ersichtliche Faktorisierung der Funktionalisierung eines Automatisierungsobjekts reduziert den Aufwand zur Herstellung eines Automatisierungsobjekts A trastisch. Im Extremfall muß nur noch ein Modul 1, 2 mit der gewünschten technologischen Funktionalität entwickelt und in den durch eine Referenzimplementierung gegebenen Rahmen eingehängt werden. Auch bei der Modulherstellung kann dabei auf vordefinierte Rahmen zurückgegriffen werden, so daß nur die Implementierung des Teils des Moduls anfällt, der die gewünschte technologische Funktionalität realisiert.

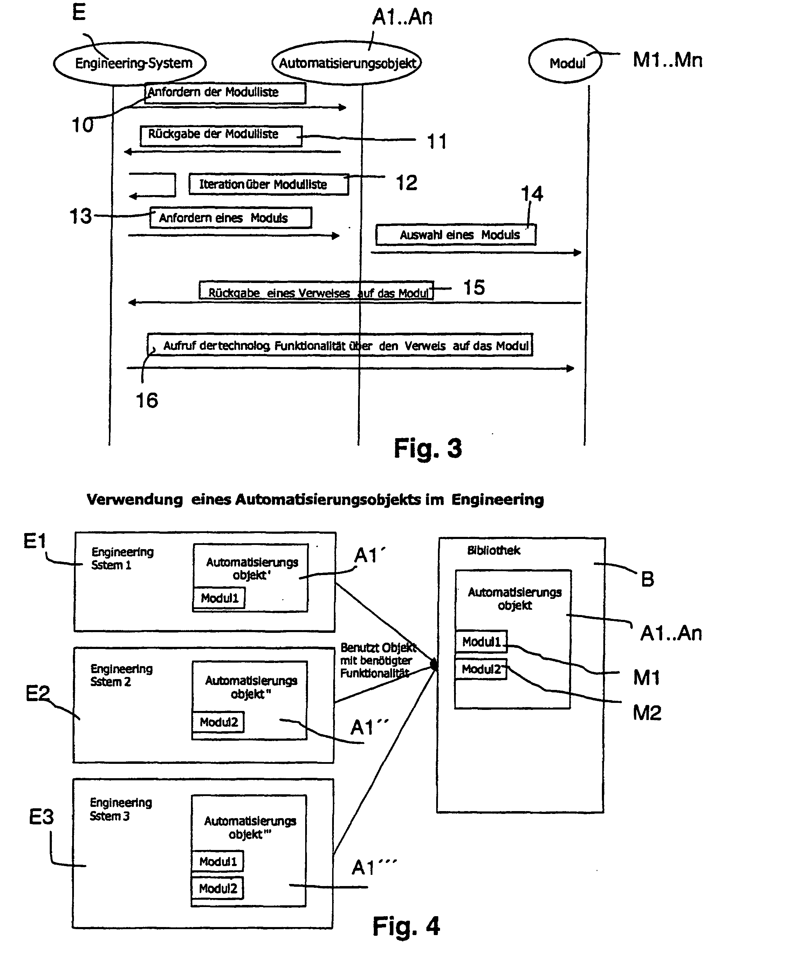

FIG 3 zeigt eine Prozeßablaufübersicht zum Zugriff auf die technologischen Funktionalität eines Automatisierungsobjekts A durch ein Engineeringsystem E. Das Engineeringsystem E fordert in einen Prozeßschritt 10 vom Automatisierungsobjekt A eine Modulliste an, woraufhin vom Automatisierungsobjekt A die Rückgabe der Modulliste erfolgt. Nach erfolgter Überprüfung der Modulliste im Prozeßschritt 12 wird vom Engineeringsystem E im Prozeßschritt 13 ein Modul M aus der Modulliste angefordert. Das Automatisierungsobjekt A wählt in einem Prozeßschritt 14 als Reaktion hierauf ein Modul M aus und gibt Prozeßschritt 15 an das Engineeringsystem E einen Verweis auf das Modul M. In einem Prozeßschritt 16 besteht nun von Seiten des Engineeringsystems E die Möglichkeit, durch einen Aufruf der technologischen Funktionalität mit Hilfe des Verweises auf das Modul M auf das gewünschte Modul zuzugreifen.

FIG 3 verdeutlicht insbesondere, das durch die Aufspaltung der Funktionalität in unabhängige Module auch ein paralleles und eine verteilte Nutzung der Automatisierungsobjekte möglich wird. Darüber hinaus wird die Entkopplung des Automatisierungsobjekts A vom jeweiligen Engineeringsystem E deutlich.

FIG 4 zeigt eine Prinzipdarstellung zur Verwendung eines Automatisierungsobjekts in verschiedenen Engineeringsystemen E1, E2, E3. Exemplarisch ist in den in FIG 4 dargestellten Ausführungsbeispiel eine Bibliothek B mit Automatisierungsobjekten A dargestellt. Die Automatisierungsobjekte A weisen jeweils die bereits gezeigte Struktur mit modularen Aufbau mit Modulen M1, M2 auf. Das erste Engineeringsystem E1 verwendet ein erstes Automatisierungsobjekt A' mit dem Modul M1, das zweite Engineeringsystem E2 verwendet ein Automatisierungsobjekt A" mit dem zweiten Modul M2, das dritte Engineeringsystem E3 verwendet ein Automatisierungsobjekt A3' mit dem Modul M1 und mit dem Modul M2.

Die Besonderheit der in FIG 4 dargestellten Struktur besteht darin, daß das jeweilige Engineeringsystem E1..E3 jeweils lediglich die Komponenten des Automatisierungsobjekts A benutzt, deren Funktionalität benötigt wird. Bei der Benutzung eines Automatisierungsobjekts A muß der Benutzer nur die von ihn benötigte Funktionalität in Form von Modulen laden. Dieser Ladevorgang wird vollautomatisch entsprechend der in FIG 3 gezeigten Art und Weise von dem Engineeringwerkzeug E1..E3 durchgeführt. Das Engineeringwerkzeug E1..E3 kommuniziert dann mit dem entsprechenden Modul M1, M2, das nicht nur die benötigten Funktionen bereitstellt, sondern auch die Darstellung des Automatisierungsobjekts übernimmt.

Zusammenfassend betrifft die Erfindung somit Automatisierungssystem mit mindestens einem Automatisierungsobjekt 1 mit einer ersten Komponente K1 zur Erzeugung einer Systemfunktionalität, mit einer zweiten Komponenten zur Erzeugung einer Basisfunktionalität, mit einer dritten Komponente K3 zur Verwaltung mindestens eines Moduls M1..Mn, wobei ein Modul jeweils eine erste Modulkomponente MK1 zur Erzeugung einer Systemfunktionalität, jeweils eine zweite Modulkomponente MK2 zur Erzeugung einer Basisfunktionalität und jeweils eine dritte Modulkomponente MK3 zur Erzeugung einer technologischen Funktionalität aufweist. Hierdurch ergibt sich unter anderem ein geringer Erstellungsaufwand für ein Automatisierungsobjekt und die Möglichkeit zu einer schrittweisen Erweiterung der Funktionalität.

## Patentansprüche

1. Automatisierungssystem mit mindestens einem Automatisierungsobjekt (A1..An), das
• aus einer ersten Komponente (K1) zur Erzeugung einer Systemfunktionalität,
• aus einer zweiten Komponente (K2) zur Erzeugung einer Basisfunktionalität und
• aus einer dritten Komponente (K3) zur Verwaltung mindestens eines Moduls (M1..Mn) besteht,
wobei ein Modul (M1..Mn)
• jeweils eine erste Modulkomponente (MK1) zur Erzeugung einer Systemfunktionalität,
• jeweils eine zweite Modulkomponente (MK2) zur Erzeugung einer Basisfunktionalität und
• jeweils eine dritte Modulkomponente (MK3) zur Erzeugung einer technologischen Funktionalität aufweist.

2. Automatisierungssystem nach Anspruch 1,
**dadurch gekennzeichnet,**
**dass** die zweite Komponente (K2) als Standardmodul ausgebildet ist und zur Verschaltung und/oder Parametrierung des Automatisierungsobjekts (A1..An) vorgesehen ist.

3. Automatisierungssystem nach einem der Ansprüche 1 oder 2,
**dadurch gekennzeichnet,**
**dass** das Automatisierungssystem eine Objektbibliothek (B) zur Verwaltung und/oder Speicherung der Automatisierungsobjekte (A1..An) mit zugehörigen Modulen (M1..Mn) aufweist.

4. Automatisierungssystem nach einem der Ansprüche 1 bis 3,
**dadurch gekennzeichnet,**
**dass** das Automatisierungssystem mindestens ein Engineeringsystem (E1..En) aufweist, wobei die im einem Engineeringsystem benutzen Automatisierungsobjekte (A1', A1", A1"') jeweils lediglich auf die Module (M1..Mn) zugreifen, deren Funktion im jeweiligen Engineeringsystem (El..En) benötigt wird.

5. Automatisierungssystem nach einem der Ansprüche 1 bis 4
**dadurch gekennzeichnet,**
**dass** das Engineeringsystem (El..En) Mittel zur Anforderung einer Modulliste (ML) eines einem Automatisierungsobjekt (A1..An) zugeordneten Automatisierungsobjekts (1) aufweist, dass auf Anforderung eines Engineeringsystems (El..En) das Automatisierungsobjekt (A1..An) ein angefordertes Modul (M1..Mn) dadurch auswählt, dass an das Engineeringsystem ein Verweis (V) auf das angeforderte Modul (M1..Mn) an das Engineeringsystem (E1..En) erfolgt und dass ein Aufruf auf die technologische Funktionalität des Moduls (M1..Mn) durch das Engineeringsystem über den Verweis (V) auf das Modul (M1..Mn) erfolgt.

6. Automatisierungssystem nach einem der Ansprüche 1 bis 4
**dadurch gekennzeichnet,**
**dass** sich die Intelligenz eines Automatisierungsobjekts (A1..An) über mehrere unabhängige Komponenten (K1..Kn) und/oder Module (M1..Mn) erstreckt, die jeweils Mittel zur Kommunikation miteinander aufweisen.

7. Verfahren zur Erstellung eines Automatisierungsobjekts (A1..An) und zur Einbettung des Automatisierungsobjekts (A1..An) in ein Engineeringsystem, wobei für ein Automatisierungsobjekt (A1..An)
• eine erste Komponente (K1) zur Erzeugung einer Systemfunktionalität,
• eine zweite Komponente (K2) zur Erzeugung einer Basisfunktionalität und
• eine dritte Komponente (K3) zur Verwaltung mindestens eines Moduls (M1..Mn) erstellt wird,
wobei für ein Modul (M1..Mn)
• jeweils eine erste Modulkomponente (MK1) zur Erzeugung einer Systemfunktionalität,
• jeweils eine zweite Modulkomponente (MK2) zur Erzeugung einer Basisfunktionalität und
• jeweils eine dritte Modulkomponente (MK3) zur Erzeugung einer technologischen Funktionalität erzeugt wird.

8. Verfahren nach Anspruch 7,
**dadurch gekennzeichnet,**
**dass** die Intelligenz des Automatisierungsobjekts (A1..An) aus der Vernetzung der Komponenten (K1..Kn) und/oder der Modulkomponenten (MK1..Mkn) miteinander gebildet wird.

9. Verfahren nach einem der Ansprüche 7 oder 8,
**dadurch gekennzeichnet,**
**dass** die Automatisierungsobjekte mit zugehörigen Modulen (M1..Mn) in einer Objektbibliothek (B) gespeichert und/oder verwaltet werden.

10. Verfahren nach einem der Ansprüche 7 bis 9,
**dadurch gekennzeichnet,**
**dass** die Automatisierungsobjekte (A1..An) in das Engineeringsystem (E1..En) jeweils dadurch eingebettet werden, dass die im einem Engineeringsystem (E1..En) benutzen Automatisierungsobj ekte (A1', A1", A1"') jeweils lediglich auf die Module (M1..Mn) zugreifen, deren Funktion im jeweiligen Engineeringsystem (E1..En) benötigt wird.

11. Verfahren nach einem der Ansprüche 7 bis 10,
**dadurch gekennzeichnet,**
**dass** der Zugriff des Engineeringsystems (E1..En) auf ein Automatisierungsobjekt in folgenden Schritten erfolgt:
• Anforderung einer Modulliste (ML) eines einem Automatisierungsobjekt zugeordneten Automatisierungsobjekts,
• Rückgabe einer Modulliste (ML) ,
• Anforderung eines Moduls (M1..Mn) beim Automatisierungsobjekt (A1..An),
• Auswahl eines Moduls (M1..Mn) durch Automatisierungsobjekt (A1..An),
• Rückgabe eines Verweises (V) auf das angeforderte Modul (M1..Mn),
• Aufruf des Automatisierungobjekts (A1..An) durch das Engineeringsystem über den Verweis (V) auf das Modul (M1..Mn).

## Claims

1. An automation system comprising at least one automation object(Al..An), which consists of
• a first component (K1) to generate a system functionality,
• a second component (K2) to generate a base functionality
• and a third component (K3) to manage at least one module (M1..Mn), whereby a module (M1..Mn)
• has a first module component (MK1) to generate a system functionality,
• a second module component (MK2) to generate a base functionality and
• a third module component (MK3) to generate a technological functionality.

2. Automation system in accordance with Claim 1, **characterized in that** the second component (K2) is designed as a standard module and is provided for interconnection with and/or parameterization of the automation object (A1..An).

3. Automation system in accordance with one of Claims 1 or 2, **characterized in that** the automation system features an object library (B) to manage and/or store the automation objects (A1..An) and modules (M1..Mn) corresponding respectively to the automation objects.

4. Automation system in accordance with one of Claims 1 to 3, **characterized in that** the automation system features at least one engineering system (E1..En), whereby the automation objects (A1', A1" , A1"') used in the engineering system each only access the module (M1..Mn) of which the function is required in the corresponding engineering system.

5. Automation system in accordance with one of Claims 1 to 4, **characterized in that** the engineering system (E1..En) features means for requesting a module list (ML) of an automation object assigned to an automation object (A1..An) which, at the request of an engineering system (E1..En) selects for the automation object (a1..An) a requested module (M1..Mn) in such a way that at the engineering system a reference (V) to the requested module (Ml..Mn is made to the engineering system (E1..En) and that a call to the technological functionality of the module (M1..Mn) is made by the engineering system via the reference (V) to the module (M1..Mn).

6. Automation system in accordance with one of Claims 1 to 3, **characterized in that** the intelligence of an automation object (A1..An) is spread over a number of independent components (K1..Kn) and/or modules (M1..Mn), each of which features means for communicating with each other.

7. Method of creating an automation object (A1..An) and of embedding the automation object (A1..An) in an engineering system, whereby for the automation object (A1..An)
• a first component (K1) to generate a system functionality,
• a second component (K2) to generate a base functionality
• and a third component (K3) to manage at least one module (M1..Mn) is created,
whereby for a module (M1..Mn)
• a first module component (MK1) to generate a system functionality,
• a second module component (MK2) to generate a base functionality and
• a third module component (MK3) to generate a technological functionality are created

8. Method in accordance with Claim 8, **characterized in that** the intelligence of the automation object (A1..An) is formed from the internetworking of the components (K1..Kn) and/or the module components (MK1..Mkn) with one another.

9. Method in accordance with one of the Claims 7 or 8, **characterized in that** the automation object with its corresponding modules (M1..Mn) is stored and/or managed in an object library (B).

10. Method in accordance with one of the Claims 7 to 9, **characterized in that** the automation objects (A1..An) are each embedded in the engineering system (E1..En) so that the automation objects (A1', A1", A1"') used in an engineering system (E1..En) each merely access the modules (M1..Mn) of which the function is needed in the respective engineering system (E1..En).

11. Method in accordance with one of the Claims 7 to 10, **characterized in that** the engineering system (E1..En) accesses the automation object in the following steps:
• Request for a module list (ML) of an automation object assigned to an automation object
• Return of a module list (ML)
• Request for a module (M1..Mn) to the automation object (A1..An)
• Selection of a module (M1..Mn) by the automation object (A1..An)
• Return of a reference (V) to the requested module (M1..Mn)
• Call of the Automation object (A1..An) by the engineering system via the reference (V) to the module (M1..Mn).

## Revendications

1. Système d'automatisation comprenant au moins un objet (A1..An) d'automatisation qui est constitué :
d'un premier élément (K1) de production d'une fonctionnalité du système,
d'un deuxième élément (K2) de production d'une fonctionnalité de base et,
d'un troisième élément (K3) de gestion d'au moins un module (M1..Mn), un module (M1..Mn) ayant :
respectivement un premier élément (MK1) de module de production d'une fonctionnalité du système,
respectivement un deuxième élément (MK2) de module de production d'une fonctionnalité de base et,
respectivement un troisième élément (MK3) de module de production d'une fonctionnalité technologique.

2. Système d'automatisation suivant la revendication 1,
**caractérisé en ce que**
le deuxième élément (K2) est constitué en module standard et est prévu pour la connexion et/ou la paramétrisation de l'objet (A1..An) d'automatisation.

3. Système d'automatisation suivant l'une des revendications 1 ou 2, **caractérisé en ce que**
le système d'automatisation a une bibliothèque (B) d'objets de gestion et/ou de mémorisation des objets (A1..An) d'automatisation ayant des modules (M1..Mn) associés.

4. Système d'automatisation suivant l'une des revendications 1 à 3, **caractérisé en ce que**
le système d'automatisation a au moins un système (E1..En) d'ingénierie, les objets (A1', A1", A1"') d'automatisation utilisés dans un système d'ingénierie accédant, respectivement, seulement au module (M1..Mn), dont la fonction est nécessaire dans le système (E1..En) respectif d'ingénierie.

5. Système d'automatisation suivant l'une des revendications 1 à 4, **caractérisé en ce que**
le système (E1..En) d'ingénierie a des moyens de demande d'une liste (ML) de modules d'un objet (1) d'automatisation associés à un objet (A1..An) d'automatisation, **en ce que** sur demande d'un système (E1..En) d'ingénierie, l'objet (A1..An) d'automatisation choisit un module (M1..Mn) demandé, par le fait qu'il s'effectue sur le système d'ingénierie un renvoi (V) au module (M1..Mn) demandé sur le système (E1..En) d'ingénierie, et qu'un, appel à la fonctionnalité technologique du module (M1..Mn) s'effectue par le système d'ingénierie par l'intermédiaire du renvoi (V) au module (M1..Mn).

6. Système d'automatisation suivant l'une des revendications 1 à 4, **caractérisé en ce que**
l'intelligence d'un objet (A1..An) d'automatisation, s'étend sur plusieurs éléments (K1..Kn) et/ou modules (M1..Mn) indépendants, qui ont respectivement des moyens de communication entre eux.

7. Procédé d'établissement de production d'un objet (A1..An) d'automatisation et d'incorporation de l'objet (A1..An) d'automatisation dans un système d'ingénierie, en produisant :
un premier élément (K1) de production d'une fonctionnalité du système,
un deuxième élément (K2) de production d'une fonctionnalité de base et,
un troisième élément (K3) de gestion d'au moins un module (M1..Mn), en produisant pour un module (M1..Mn) :
respectivement un premier élément (MK1) de module de production d'une fonctionnalité du système,
respectivement un deuxième élément (MK2) de module de production d'une fonctionnalité de base et,
respectivement un troisième élément (MK3) de module de production d'une fonctionnalité technologique.

8. Procédé suivant la revendication 7,
**caractérisé en ce que**
l'intelligence de l'objet (A1..An) d'automatisation est formée par la combinaison des éléments (K1, Kn) et/ou des éléments (MK1..MKn) de module entre eux.

9. Procédé suivant l'une des revendications 7 ou 8,
**caractérisé en ce que**
les objets d'automatisation avec des modules (M1..Mn) associés sont mémorisés et/ou gérés dans une bibliothèque (B) d'objets.

10. Procédé suivant l'une des revendications 7 à 9,
**caractérisé en ce que**
les objets (A1..An) d'automatisation sont incorporés dans le système (E1..En) d'ingénierie respectivement, par le fait que les objets (A1', A1", A1"') d'automatisation utilisés dans un système (E1..En) d'ingénierie ont accès, respectivement, seulement au module (M1..Mn) dont la fonction est nécessaire dans chaque système (E1..En) d'ingénierie.

11. Procédé suivant l'une des revendications 7 à 10,
**caractérisé en ce que**
l'accès du système (E1..En) d'ingénierie à un objet d'automatisation s'effectue par les stades suivants :
demande d'une liste (ML) de modules d'un objet d'automatisation associé à un objet d'automatisation,
renvoi d'une liste (ML) de modules,
demande d'un module (M1..Mn) à l'objet (A1..An) d'automatisation,
choix d'un module (M1..Mn) par l'objet (A1..An) d'automatisation,
renvoi d'un renvoi (V) au module (M1..Mn) demandé,
appel de l'objet (A1..An) d'automatisation par le système d'ingénierie par l'intermédiaire du renvoi (V) au module (M1..Mn).
